# EUROPÄISCHE PATENTSCHRIFT

(11) **EP 3 378 643 B1**
(45) Veröffentlichungstag und Bekanntmachung des Hinweises auf die Patenterteilung: **04.12.2019**
(21) Anmeldenummer: 18163693.7
(22) Anmeldetag: 23.03.2018
(51) Int. Cl.: B32B 37/06, B32B 41/00, B30B 15/06

(54) **LAMINATIONSBLECH UND VORRICHTUNG ZUM MESSEN EINER TEMPERATUR BEIM LAMINIEREN EINES SUBSTRATSCHICHTENSTAPELS**
LAMINATION SHEET AND DEVICE FOR MEASURING THE TEMPERATURE IN LAMINATING A SUBSTRATE LAYER STACK
TÔLE DE LAMINAGE ET DISPOSITIF DE MESURE D'UNE TEMPÉRATURE DANS UN SUBSTRAT LORS DU LAMINAGE D'UN EMPILEMENT DE COUCHES DE SUBSTRAT

(30) Priorität: 24.03.2017 DE 102017205068
(43) Veröffentlichungstag der Anmeldung: 26.09.2018
(73) Patentinhaber: Bundesdruckerei GmbH, 10969 Berlin (DE)
(72) Erfinder: Radtke, Patrick, 12437 Berlin (DE); Peinze, Franziska, 12589 Berlin (DE)
(74) Vertreter: Patentanwälte Bressel und Partner mbB

(56) Entgegenhaltungen:
- US-A- 5 616 199
- US-B1- 6 391 133
- "Thermocouple", , 6. März 2017 (2017-03-06), XP002783918, Gefunden im Internet: URL:https://web.archive.org/web/2017032611 3842/https://en.wikipedia.org/wiki/Thermoc ouple [gefunden am 2018-08-16] & "Thermoelement", , 21. November 2016 (2016-11-21), XP002783919, Gefunden im Internet: URL:https://web.archive.org/web/2016122517 3827/https://de.wikipedia.org/wiki/Thermoe lement [gefunden am 2018-08-16]

## Beschreibung

Die Erfindung betrifft ein Laminationsblech zum Laminieren eines aus mehreren Substratschichten bestehenden Substratschichtenstapels zu einem Sicherheits-Dokumentenkörper. Ferner betrifft die Erfindung eine Vorrichtung zum Messen einer Temperatur beim Laminieren eines aus mehreren Substratschichten bestehenden Substratschichtenstapels zu einem Sicherheits-Dokumentenkörper.

Bei einer bestimmten Form von Sicherheitsdokumenten ist es üblich, Substratschichten zu einem Substratschichtenstapel anzuordnen und in einer Laminationspresse zu einem einzigen Sicherheits-Dokumentenkörper zu laminieren. Hierbei wird der Substratschichtenstapel in der Regel zwischen zwei Laminationsblechen angeordnet. So ist es möglich Oberflächenstrukturen des Sicherheits- Dokumentenkörpers präzise auszubilden. Beispielsweise können beugende Reliefstrukturen oder auch Mikrolinsen zum Ausbilden eines sogenannten Changeable Laser Images (CLI), d.h. für ein mittels Lasermarkierungen auszubildendes betrachtungsrichtungsabhängiges Sicherheitsmerkmal (Kippbild), beim Laminieren in die Oberflächen eingeprägt werden.

Ein wichtiger Prozessparameter bei der Lamination ist die Temperatur. Bei kontinuierlichen Laminationsprozessen bleibt die Temperatur an den Laminationsblechen weitgehend konstant. Hier ist eine direkte und unmittelbare Temperaturregelung von untergeordneter Bedeutung, da die entsprechenden Heizaggregate auf Grund einer großen Temperaturträgheit nur sehr verzögert Temperaturänderungen umsetzen können. Bei diskontinuierlichen Laminationsprozessen wird die erforderliche Wärmeenergie hingegen durch schnell reagierende Heizelemente erzeugt. Um hierbei eine zuverlässige und exakte Steuerung der Prozessparameter zu ermöglichen, ist eine möglichst gute Temperaturmessung notwendig.

Aus der US 6,391,133 B1 sind ein Verfahren und eine Vorrichtung zum Steuern eines Wärmeverbindungsprozesses in einer Wärmeverbindungsvorrichtung bereit. Die Temperatur wird an einer Grenzfläche zwischen der Presseinrichtung und dem zu pressenden Gegenstand erfasst, und eine Signalverarbeitungseinrichtung erfasst eine schnelle Temperaturänderung an der Grenzfläche, um ein Zyklusstartsignal bereitzustellen, das den Beginn des Wärmeverbindungszyklus anzeigt. Die Signalverarbeitungseinrichtung detektiert dann das Erreichen einer voreingestellten Temperatur, die an der Schnittstelle erreicht wird, um ein Zyklusende-Signal bereitzustellen, das den Abschluss des Wärmeverbindungszyklus anzeigt.

Die US 5,616,199 A beschreibt eine Vorrichtung zum elektronischen Nahtschweißen mehrerer ähnlicher oder unähnlicher polymerer Materialien durch Platzieren der Materialien zwischen zwei gegenüberliegenden Platten, wobei die Platten Kühlrohre und die erforderliche Kombination von Heizelementen aufweisen, die in den Platten angeordnet sind. Die gegenüberliegenden Platten werden dann durch eine Kraft geschlossen, die durch ein Steuermerkmal reguliert wird, das auch den Zeitpunkt, die Zeitdauer und die Temperatur bestimmt, die von den Heizelementen und Kühlrohren der erzeugt wird. Nach Beendigung des elektronischen Nahtverschmelzungszyklus sind die mehreren Schichten aus polymeren Materialien zusammengeschmolzen.

Der Erfindung liegt somit das technische Problem zu Grunde, ein Laminationsblech zum Laminieren eines aus mehreren Substratschichten bestehenden Substratschichtenstapels zu einem Sicherheits-Dokumentenkörper zu schaffen, bei dem eine Bestimmung der Laminationstemperatur verbessert ist. Ferner soll eine Vorrichtung zum Messen einer Temperatur beim Laminieren eines aus mehreren Substratschichten bestehenden Substratschichtenstapels zu einem Sicherheits-Dokumentenkörper geschaffen werden.

Die technische Aufgabe wird erfindungsgemäß durch ein Laminationsblech mit den Merkmalen des Patentanspruchs 1 und eine Vorrichtung mit den Merkmalen des Patentanspruchs 14 gelöst. Vorteilhafte Ausgestaltungen der Erfindung ergeben sich aus den Unteransprüchen.

Insbesondere wird ein Laminationsblech zum Laminieren eines aus mehreren Substratschichten bestehenden Substratschichtenstapels zu einem Sicherheits-Dokumentenkörper geschaffen, wobei auf oder an einer beim Laminieren den Substratschichten zugewandten Seite des Laminationsblechs mindestens ein Temperatursensor ausgebildet ist, wobei an dem mindestens einen Temperatursensor ein Messsignal über Anschlusskontakte abgreifbar ist. Der Begriff Messsignal soll hier eine elektrisch messbare Größe bedeuten.

Ferner wird eine Vorrichtung zum Messen einer Temperatur beim Laminieren eines aus mehreren Substratschichten bestehenden Substratschichtenstapels zu einem Sicherheits-Dokumentenkörper geschaffen, umfassend ein erfindungsgemäßes Laminationsblech, eine Auswerteeinrichtung, wobei die Auswerteeinrichtung derart ausgebildet ist, das Messsignal an den Anschlusskontakten abzugreifen und aus dem abgegriffenen Messsignal durch Vergleich mit einer Kennlinie des mindestens einen Temperatursensors eine Temperatur am Ort des mindestens einen Temperatursensors abzuleiten und als entsprechendes Temperatursignal und/oder ein aus der Temperatur abgeleitetes Prozesssteuersignal auszugeben.

Die Kernidee der Erfindung ist, einen Temperatursensor möglichst nahe an dem Bereich anzuordnen, an dem die Lamination stattfindet, das heißt an einer beim Laminieren dem Substratschichtenstapel zugewandten Seite bzw. Oberfläche des Laminationsblechs. Auf diese Weise kann eine Temperatur direkt an dem Substratschichtenstapel gemessen werden. Dies ermöglicht eine direkte Temperaturmessung im für den Laminationsprozess relevanten Bereich. Der Temperaturmessung ist somit unmittelbar in das Laminationsblech integriert. Dies hat den Vorteil, dass es bei der Temperaturregelung keine Verzögerungen auf Grund einer nur indirekten Temperaturmessung gibt, beispielsweise weil eine Temperaturmessung lediglich an von der beim Laminieren dem Substratschichtenstapel zugewandten Seite bzw. Oberfläche des Laminationsblechs entfernten Heizelementen vorgenommen wird. Zudem muss bei der Abschätzung der Prozesstemperatur im Substratschichtenstapel keine zusätzliche Wegstrecke zwischen Temperatursensor und der beim Laminieren dem Substratschichtenstapel zugewandten Seite bzw. Oberfläche des Laminationsblechs berücksichtigt werden. Eine Temperaturregelung kann somit insbesondere schneller vorgenommen werden.

Beim Laminieren kann es gewünscht sein, dass eine Oberfläche des späteren Sicherheits-Dokumentenkörpers plan ausgebildet ist. Dabei ist es insbesondere zweckmäßig, wenn sich eine Struktur oder Form des Temperatursensors beim Laminieren nicht in die Oberfläche des Substratschichtenstapels einprägt. Erfindungsgemäß ist deshalb vorgesehen, dass der mindestens eine Temperatursensor auf der beim Laminieren den Substratschichten zugewandten Seite in eine dafür vorgesehene Aussparung in einem Grundelement des Laminationsblechs eingebracht ist. Die Aussparungen sind vorteilhafterweise nur in der dem Substratschichtenstapel zugewandten Oberfläche oder Oberseite des Grundelements des Laminationsblechs bzw. des Laminationsblechs ausgebildet. Durchbrechungen in der Pressrichtung sind erneut vorzugsweise nicht vorgesehen.

Als besonders Vorteilhaft hat es sich erwiesen den Temperatursensor in Form einer oder mehrerer Beschichtungen auf der Oberfläche oder an bzw. in der Oberfläche des Laminationsblechs auszubilden, die dem Substratschichtenstapel beim Laminieren zugewandt ist. Hierdurch wird es möglich auf Durchbrechungen parallel zu einer Pressrichtung durch das Laminationsblech zu verzichten. Ein Grundelement des Laminationsblechs wird somit nicht durchbrochen, was eine erhöhte strukturelle Stabilität des Grundelements und somit des Laminationsblechs gegenüber Blechen gewährleistet, die Durchbrechungen durch das Grundelement bzw. das Laminationsblech aufweisen. Dieses gilt selbst dann, wenn die Durchbrechungen gegebenenfalls wieder verfüllt sind.

Laminationsbleche ohne Durchbrechungen, die das Laminationsblech vollständig durchdringen, können mit einer geringeren Materialstärke ausgebildet sein, als Belche mit Durchbrechungen. Somit kann Material bei der Herstellung eingespart werden, aber auch bei gleichem Pressenhub ein Substratschichtenstapel mit einer höheren Gesamtdicke bearbeitet werden. Gegebenenfalls können mehrere Substratschichtenstapel, die jeweils von Laminationsblechen eingeschlossen sind, oder sogar eine größere Anzahl dieser Substratschichtenstapel in einem Pressvorgang bearbeitet werden, als bei der Verwendung materialstärkerer Laminationsbleche.

Insbesondere kann die beim Laminieren den Substratschichten zugewandten Seite dann im Bereich des Temperatursensors plan ausgebildet sein. Plan soll in diesem Fall heißen, dass der eingebrachte Temperatursensor zu keiner zusätzlichen strukturellen Veränderung führt. Insbesondere soll das Laminationsblech mit dem eingebrachten Temperatursensor die gleiche Oberfläche aufweisen wie ein entsprechendes Laminationsblech ohne einen darin eingebrachten Temperatursensor. Deshalb ist in einer vorteilhaften Ausführungsform vorgesehen, dass der Temperatursensor nach dem Einbringen in die Aussparung derart ausgebildet ist, dass dieser zu keiner zusätzlichen Struktur auf der beim Laminieren den Substratschichten zugewandten Seite führt. Die vorgesehene Aussparung kann beispielsweise aus dem Grundelement des Laminationsblechs ausgefräst oder abgetragen werden oder bereits bei der Herstellung des Grundelements ausgebildet werden, beispielsweise durch Prägen. Anschließend wird der mindestens eine Temperatursensor in die Aussparung eingebracht. Die Aussparung wird dann beispielsweise verfüllt und die beim Laminieren den Substratschichten zugewandten Seite wieder glattgeschliffen oder poliert. Die Aussparung ist vorzugsweise nur in der einen Oberfläche des Grundelements ausgebildet und durchdringt oder durchbricht das Grundelement quer zur flächigen Ausdehnung des Laminationsblechs nicht vollständig. Somit wird das Grundelement nicht quer und insbesondere nicht senkrecht zu der beim Laminieren dem Substratschichtenstapel zugewandten Seite durchbrochen.

Anschlusskontakte zu dem Temperatursensor können so in Randbereiche des Laminationsblechs geführt werden. Insbesondere werden Anschlusskontakte an der Oberfläche der beim Laminieren dem Substratschichtenstapel zugewandten Seite des Laminationsblechs und/oder einer Stirnseite des Laminationsblechs ausgebildet. Eine gegenüberliegende Seite wird durch den Temperatursensor nicht beeinflusst. So können die elektrischen kontakte leicht ausgebildet werden, sind einfach zugänglich und behindern den Laminations- oder Pressvorgang in einer Laminationspresse nicht.

Bei einer Ausführungsform ist in die dem Substratschichtenstapel beim Laminieren zugewandte Seite des Grundelements des Laminationsblechs eine langgestreckte Aussparung eingearbeitet oder ausgebildet. Diese erstreckt sich vorzugsweise von einer Kante oder einem Rand der dem Substratschichtenstapel beim Laminieren zugewandten Seite des Grundelements zu einer anderen Kante oder anderem Rand dieser Seite oder von einer Kante oder einem Rand ausgehend zurück zu dieser Kante oder diesem Rand. In diese Aussparung wird innen dann ein Isoliermittel und anschließend mit ein oder zwei Sensormaterialien beschichtet und/oder verfüllt.

In einer Ausführungsform ist der Temperatursensor als Messwiderstand ausgebildet, so dass ein Widerstandsthermometer bereitgestellt wird. Ein solcher Messwiderstand kann beispielsweise auf Platin basieren und als drahtgewickelter Widerstand oder als Schichtwiderstand ausgebildet sein. Es können aber auch andere Materialien zum Einsatz kommen, wie beispielsweise Nickel oder Silizium.

In einer besonders vorteilhaften Ausführungsform ist vorgesehen, dass der mindestens eine Temperatursensor als Thermoelement ausgebildet ist, wobei das Thermoelement ein erstes Material und ein zweites Material umfasst, und wobei ein Kontaktpunkt des Thermoelements auf der beim Laminieren den Substratschichten zugewandten Seite des Laminationsblechs ausgebildet ist, und wobei das Messsignal eine Thermospannung ist.

Abschnitte des ersten Materials und des zweiten Materials sind außer am Kontaktpunkt und einem Referenzkontaktpunkt gegeneinander und das Laminationsblech elektrisch isoliert.

Referenzkontaktpunkte zwischen dem ersten Material und dem zweiten Material jeweils mit einer Messleitung aus einem dritten Material für eine Spannungsmessung werden dann außerhalb des Laminationsblechs in einer Umgebung mit einer bekannten oder bestimmbaren Referenztemperatur ausgebildet. Es kann beispielsweise vorgesehen sein, die Umgebung der Referenzkontaktpunkte auf eine bestimmte Temperatur zu kühlen oder zu heizen, beispielsweise mittels dafür vorgesehener Peltierelemente. Alternativ kann vorgesehen sein, die Referenzkontaktpunkte in einer Umgebung bei Raumtemperatur auszubilden und die exakte Raumtemperatur dann mittels eines weiteren Temperatursensors mit bekannter Kennlinie, beispielsweise mittels eines Messwiderstands zu bestimmen. Mittels der vorgegebenen oder bestimmten Referenztemperatur kann die Auswerteeinrichtung aus der bestimmten Thermospannung dann die Temperatur am Kontaktpunkt berechnen. Insbesondere ist dabei wichtig, dass sämtliche Zuleitungen zwischen dem Kontaktpunkt und den Referenzkontaktpunkten jeweils entsprechend aus dem gleichen Material bestehen wie das erste Material und das zweite Material. Das heißt die Zuleitung zwischen dem ersten Kontaktpunkt und einem der referenzkontaktpunkte ist aus dem ersten Material die andere Zuleitung zwischen dem Kontaktpunkt und dem anderen Referenzkontaktpunkt aus dem zweiten Material.

Je nach Ausführungsform des Thermoelements und einem Material des Grundelements des Laminationsblechs kann es zweckmäßig sein, eine Isolation zwischen den verwendeten Materialen vorzusehen. In einer weiteren Ausführungsform ist deshalb vorgesehen, dass das erste Material und das zweite Material durch geeignete Isolationsmittel von dem Grundelement des Laminationsblechs und/oder voneinander elektrisch isoliert sind. Die Isolationsmittel verhindern, dass ein unerwünschter Kurzschluss gebildet wird. Dies wäre beispielsweise der Fall, wenn das erste Material und das zweite Material des Thermoelements ohne die Isoliermittel auf eine Oberfläche aus Metall aufgebracht würden. Das Metall der Oberfläche würde dann einen direkten Kurzschluss verursachen, so dass eine Messung der Thermospannung nicht mehr möglich wäre. Das Isoliermittel kann darüber hinaus auch der flexiblen Ausgestaltung der äußeren Form des Thermoelements dienen. Dies kann vorteilhaft sein, wenn es bei der Fertigung des Laminationsblechs Unregelmäßigkeiten am Thermoelement auftreten. Diese Unregelmäßigkeiten könnten in einem letzten Fertigungsschritt durch Ausformen des Isoliermittels korrigiert oder beseitigt werden, beispielsweise durch Planarisieren oder Abschleifen.

Bei einem Laminationsblech ist es insbesondere wichtig, dass die beim Laminieren den Substratschichten zugewandten Seite nach Möglichkeit nur die Strukturen aufweist, welche in die Oberfläche des Laminatschichtenstapels eingeprägt werden sollen. Andere Strukturen, welche durch die Fertigung des Laminationsblechs und/oder darin verbaute Elemente hervorgerufen werden, sollten vermieden oder möglichst klein gehalten werden.

Es kann insbesondere auch vorgesehen sein, dass das Laminationsblech Prägestrukturen, insbesondere zum Ausbilden von Beugungsstrukturen, auf der beim Laminieren den Substratschichten zugewandten Seite umfasst. Sind Prägestrukturen an der Position des Temperatursensors vorgesehen, so wird der Temperatursensor derartig in die Aussparung eingebracht und ausgebildet, dass die vorgesehenen Prägestrukturen an der Position des Temperatursensors nach dem Einbringen ausgebildet sind.

In einer vorteilhaften Ausführungsform ist deshalb vorgesehen, dass das erste Material und das zweite Material jeweils als dünne Schichten auf der beim Laminieren den Substratschichten zugewandten Seite des Laminationsblechs aufgebracht sind. Durch die dünnen Schichten wird gewährleistet, dass der Einfluss des Thermoelements auf den Laminationsprozess bzw. auf die Oberfläche des Substratschichtenstapels gering gehalten wird.

Ein weiterer Vorteil ist, dass die dünnen Schichten eines solchen Thermoelements auf eine Oberfläche bzw. auf die beim Laminieren den Substratschichten zugewandten Seite aufgedruckt werden können. Dies vereinfacht den Herstellungsprozess. Deshalb sieht eine weitere Ausführungsform vor, dass das Thermoelement bzw. deren Elemente mittels eines Druckverfahrens auf die beim Laminieren den Substratschichten zugewandte Seite aufgebracht werden. Dies ermöglicht darüber hinaus eine flexible Gestaltung der Anordnung und Form des Thermoelements.

Insbesondere kann es zweckmäßig sein, nicht die gesamte Fläche der beim Laminieren den Substratschichten zugewandten Seite mit einem Thermoelement zu bedecken. Eine weitere vorteilhafte Ausführungsform sieht deshalb vor, dass die dünnen Schichten lediglich einen Teil einer Gesamtfläche der beim Laminieren den Substratschichten zugewandten Seite des Laminationsblechs überdecken. Dann kann die Position des Thermoelements nahezu frei gewählt werden und das Thermoelement kann an einer Position ausgebildet sein, welche für den Laminationsprozess von besonderem Interesse ist. Insbesondere kann vorgesehen sein, dass das Thermoelement in einem Bereich ausgebildet ist, an dem sich im Substratschichtenstapel der spätere Nutzen befindet. Es kann aber auch zusätzlich oder alternativ vorgesehen sein, dass das Thermoelement im Bereich des späteren Verschnitts des Substratschichtenstapels ausgebildet ist.

Insbesondere sollten die dünnen Schichten eine möglichst geringe Schichtdicke aufweisen, so dass ihre Herstellung wenig Aufwand und Material erfordert und eine mechanische Beeinflussung des Laminationsprozesses möglichst gering gehalten wird. Eine weitere Ausführungsform sieht deshalb vor, dass die dünnen Schichten jeweils eine Schichtdicke zwischen 10 nm und 100 µm, bevorzugt zwischen 1000 nm und 50 µm, besonders bevorzugt zwischen 10 µm und 30 µm aufweisen.

Besonders gut lassen sich Zubereitungen auf Polymerbasis verdrucken. In einer weiteren vorteilhaften Ausführungsform ist deshalb vorgesehen, dass das erste Material und/oder das zweite Material ein leitfähiges Polymer umfasst. Dabei ist es vor allem wichtig, dass das leitfähige Polymer derartig ausgewählt wird, dass dieses einer Erwärmung auf die Prozesstemperatur beim Laminieren standhält.

Entsprechend ist in einer vorteilhaften Ausführungsform vorgesehen, dass die Isolationsmittel ein nicht-leitfähiges Polymer umfassen. Dies ermöglicht eine Herstellung des Thermoelements ausschließlich im Wege eines Aufdruckens auf die beim Laminieren den Substratschichten zugewandte Seite.

Insbesondere ist in einer Ausführungsform vorgesehen, dass das leitfähige Polymer PEDOT:PSS oder PANI oder PPV oder PPy umfasst.

In anderen Ausführungsformen kann vorgesehen sein, dass das erste Material und/oder das zweite Material ein Metall und/oder eine Metalllegierung umfassen. Hier können bekannte Legierungen zum Einsatz kommen, wie beispielsweise Ni-Cr/Cu-Ni (Typ E), Fe/Cu-Ni (Typ J), Ni-Cr/Ni-Al (Typ K), Ni-Cr-Si/Ni-Si (Typ N), Pt-13%Rh/Pt (Typ R), Pt-10%Rh/Pt (Typ S), Cu/Cu-Ni (Typ T), Pt-30%Rh/Pt-6%Rh (Typ B). Die Verwendung bereits bekannter Materialien für das Thermoelement hat den Vorteil, dass ein reicher Erfahrungsschatz mit diesen Materialen zur Verfügung steht und insbesondere die Kennlinien dieser Thermoelemente bekannt sind und nicht gesondert bestimmt werden müssen.

Die Schichten des Thermoelements können über ein Dünnschichtverfahren aufgebracht werden. Hierbei kommen Bedampfen, Sputtern, Drucken oder Ähnliches in Frage.

Besonders vorteilhaft ist es beim Fertigungsprozess, wenn das Laminationsblech lösbar mit einer Laminationspresse, beispielsweise über einen Werkzeugträger, verbunden ist. Dann kann das Laminationsblech auf einfache Weise ausgetauscht werden. Ist eine solche Ausführungsform vorgesehen oder gewünscht, müssen auch Zuleitungen zu dem Temperatursensor lösbar mit den Anschlusskontakten zu verbinden sein. Deshalb ist in einer vorteilhaften Ausführungsform vorgesehen, dass die Anschlusskontakte eine Kontaktkupplung umfassen, über die der mindestens eine Temperatursensor an dem Laminationsblech lösbar mit einer Zuleitung zu einer Auswerteeinrichtung verbindbar ist. Diese Kontaktkupplung kann beispielsweise an dem Werkzeugträger ausgebildet sein, so dass ein Einsetzen oder Anbringen des Laminationsblechs in oder an den Werkzeugträger zu einer Ausbildung einer elektrischen Verbindung über die Kontaktkupplung führt.

Ist der Temperatursensor als Thermoelement ausgebildet, so ist insbesondere zu beachten, dass sämtliche Anschlusskontakte, Kontaktkupplungen und Zuleitungen aus den gleichen Materialien bestehen, wie das erste Material und das zweite Material. Die Materialien müssen bis zum einem Referenzkontaktpunkt des Thermoelements gleich ausgebildet sein.

Bei der Lamination, insbesondere von Sicherheitsdokumenten, ist die Qualität des fertigen Laminats von entscheidender Bedeutung. Die Qualität des Laminats bzw. des Laminationsprozesses kann noch besser überwacht und geregelt werden, wenn die Temperatur an mehreren Positionen auf der beim Laminieren den Substratschichten zugewandten Seite erfasst und bestimmt wird. Deshalb ist in einer besonders vorteilhaften Ausführungsform vorgesehen, dass auf oder an der beim Laminieren den Substratschichten zugewandten Seite des Laminationsblechs mindestens ein weiterer Temperatursensor ausgebildet ist, wobei an dem mindestens einen weiteren Temperatursensor ein weiteres Messsignal an weiteren Anschlusskontakten abgreifbar ist, und wobei der mindestens eine weitere Temperatursensor eine Temperatur an einer anderen Position auf der beim Laminieren den Substratschichten zugewandten Seite des Laminationsblechs bestimmt als der mindestens eine Temperatursensor. Prinzipiell können die Temperatursensoren alle gleichartig ausgebildet sein und die bereitgestellten Messsignale der einzelnen Temperatursensoren von einer einzigen Auswerteeinrichtung verarbeitet werden. Es kann dann beispielsweise eine zweidimensionale Temperaturkarte der beim Laminieren den Substratschichten zugewandten Seite erstellt werden, welche einen genauen Temperaturverlauf an der beim Laminieren den Substratschichten zugewandten Seite abbildet.

In Stapelpressen, in denen mehrere Substratschichtenstapel in einem Pressvorgang zu mehreren Laminationskörpern laminiert werden, können Laminationsbleche eingesetzt werden, deren gegenüberliegende Oberflächen jeweils einem der Substratschichtenstapel zugewandt sind. Solche doppelseitigen Laminationsbleche verfügen vorteilhafterweise an jeder der gegenüberliegenden Oberflächen des Laminationsblechs über einen Temperatursensor. Diese sind vorzugsweise mittels dünner Beschichtungen auf den Oberflächen oder in Aussparungen auf den Oberflächen ausgebildet, die das Grundelement jeweils nicht durchdringen.

Nachfolgend wird die Erfindung anhand bevorzugter Ausführungsbeispiele unter Bezugnahme auf die Figuren näher erläutert. Hierbei zeigen:
- Fig. 1: eine schematische Darstellung einer Ausführungsform des Laminationsblechs mit einem Thermoelement als Temperatursensor in einer Draufsicht auf die beim Laminieren den Substratschichten zugewandte Seite;
- Fig. 2: eine schematische Darstellung der in Fig. 1 gezeigten Ausführungsform des Laminationsblechs in einer Seitenansicht durch eine Schnittebene, welche Darstellung jedoch nicht unter den Schutzumfang der Erfindung fällt;
- Fig. 3: eine schematische Darstellung einer Ausführungsform des Laminationsblechs mit einem Thermoelement als Temperatursensor in einer Seitenansicht durch die Schnittebene;
- Fig. 4: eine schematische Darstellung einer Vorrichtung zum Messen einer Temperatur beim Laminieren mit einem erfindungsgemäßen Laminationsblech;
- Fig. 5: eine schematische Darstellung einer Laminationsvorrichtung mit zwei erfindungsgemäßen Laminationsblechen;
- Fig. 6: eine schematische Darstellung einer anderen Ausführungsform eines Laminationsblechs mit einem Thermoelement als Temperatursensor in einer Draufsicht auf die beim Laminieren den Substratschichten zugewandte Seite; und
- Fig. 7: eine schematische Schnittansicht entlang der Linie 10 der in Fig. 6 gezeigten Ausführungsform des Laminationsblechs.

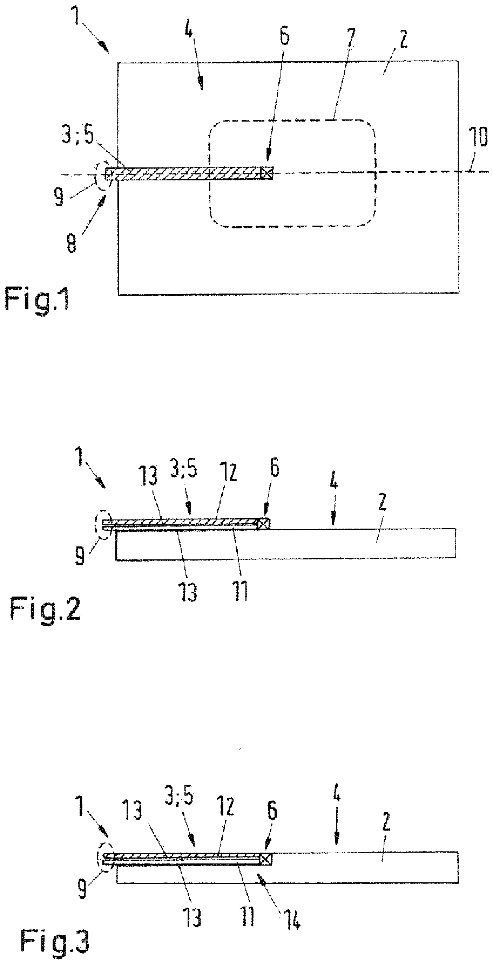

Fig. 1 zeigt eine schematische Darstellung einer Ausführungsform des Laminationsblechs 1. Das Laminationsblech 1 umfasst ein Grundelement 2. Ein Temperatursensor 3 ist auf oder an der beim Laminieren den Substratschichten zugewandten Seite 4 des Laminationsblechs 1 ausgebildet. Der Temperatursensor 3 ist in diesem Beispiel als Thermoelement 5 ausgebildet, welches einen Kontaktpunkt 6 in einem Nutzenbereich 7 des Laminationsblechs 1 aufweist. Mittels des Thermoelements 5 kann somit eine Temperatur an der Position des Kontaktpunktes 6 bestimmt werden. An einem Randbereich 8 des Laminationsblechs 1 sind Anschlusskontakte 9 ausgebildet, an denen ein Messsignal des Thermoelements 5 abgegriffen werden kann.

In Fig. 2 ist eine Schnittdarstellung durch eine Schnittebene 10 der in der Fig. 1 gezeigten Ausführungsform des Laminationsblechs 1 gezeigt. Gleiche Bezugszeichen bezeichnen dabei gleiche Merkmale. Der als Thermoelement 5 ausgebildete Temperatursensor 3 umfasst ein erstes Material 11 und ein zweites Material 12. Das erste Material 11 und das zweite Material 12 sind durch Isolationsmittel 13 voneinander und von dem Grundelement 2 des Laminationsblechs 1 elektrisch isoliert. Das erste Material 11 und das zweite Material 12 umfassen beispielsweise jeweils ein leitfähiges Polymer, die Isolationsmittel 13 umfassen hingegen beispielsweise ein nicht-leitfähiges Polymer. Als leitfähiges Polymer kommt z. B. PEDOT:PSS in Frage. Im Prinzipiell können aber auch Metalle oder Metalllegierungen zum Ausbilden des ersten Materials 11 und/oder des zweiten Materials 12 des Thermoelements 5 gewählt werden. Das erste Material 11 und das zweite Material 12 und die Isolationsmittel 13 können als dünne Schichten, welche zusammen beispielsweise einige Hundert Nanometer dick sind, auf das Grundelement 2 des Laminationsblechs 1 aufgedruckt werden. Die Schichtfolge ist dabei: eine Schicht des Isoliermittels 13, eine Schicht des ersten Materials 11, eine weitere Schicht des Isoliermittels 13 und eine Schicht des zweiten Materials 12. Anschließend kann eine weitere Schicht des Isoliermittels 13 oder eine Schutzschicht etc. vorgesehen sein.

Im Bereich des Kontaktpunktes 6 ist zwischen den Schichten des ersten Materials 11 und des zweiten Materials 12 kein Isoliermittel 13 vorgesehen, so dass das erste Material 11 und das zweite Material 12 dort in elektrischem Kontakt miteinander sind.

In diesem Beispiel sind das erste Material 11 und das zweite Material 12 derartig ausgebildet, dass sie an dem Randbereich 8 einen als Anschlusskontakt 9 dienenden Überstand ausbilden. Die Überstände können durch das Material des Grundelements 2 zum Zwecke der Stabilisierung unterfüttert sein.

Fig. 3 zeigt eine schematische Darstellung einer weiteren Ausführungsform eines Laminationsblechs 1 mit einem Thermoelement 5 als Temperatursensor 3 in einer Seitenansicht durch die Schnittebene 10. Die Ausführungsform entspricht im Wesentlichen der in der Fig. 2 gezeigten Ausführungsform. Der Unterschied ist jedoch, dass das Thermoelement 5 in eine Aussparung 14 in dem Grundelement 2 des Laminationsblechs 1 eingebracht ist. Die Aussparung 14 kann beispielsweise vor dem Einbringen des Thermoelements 5 ausgefräst werden. Die Aussparung 14 durchdringt das Grundelement 2 nicht, d. h. die Aussparung 14 bildet kein Durchgangsloch durch das Grundelement 2. Das Thermoelement 5 wird dann in die Aussparung eingebracht, beispielsweise durch Aufdrucken des ersten Materials 11, des zweiten Materials 12 und der Isoliermittel 13 in die Aussparung 14 hinein. Nach dem Einbringen des Thermoelements 5 wird die beim Laminieren den Substratschichten zugewandte Seite 4 beispielsweise wieder planarisiert oder poliert. Ebenso kann vorgesehen sein, dass Prägestrukturen, die auf der beim Laminieren den Substratschichten zugewandten Seite 4 ausgebildet sein sollen, nach Einbringen des Thermoelements 5 in die Aussparung 14 hergestellt werden.

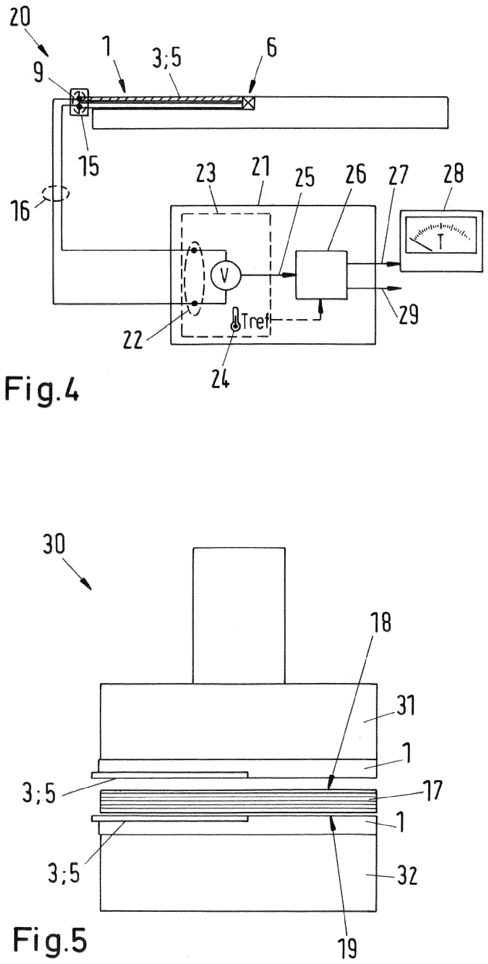

Fig. 4 zeigt eine schematische Darstellung einer Vorrichtung 20 zum Messen einer Temperatur beim Laminieren mit einem erfindungsgemäßen Laminationsblech 1. Der Temperatursensor 3 ist in diesem Fall wiederum ein Thermoelement 5. Die Vorrichtung 20 umfasst neben dem Laminationsblech 1 eine Auswerteeinrichtung 21.

Die Anschlusskontakte 9 des Thermoelements 5 umfassen eine Kontaktkupplung 15, mittels derer diese lösbar mit Zuleitungen 16 zu der Auswerteeinrichtung 21 verbunden sind. Die Zuleitungen 16 zu dem Thermoelement 5 bestehen dabei ebenfalls aus dem ersten Material 11 und dem zweiten Material 12.

In der Auswerteeinrichtung 21 werden die Zuleitungen 16 auf Referenzkontaktpunkte 22 geführt, an denen ein Übergang auf ein einheitliches Leitermaterial, beispielsweise Kupfer, vorgenommen wird. Die Referenzkontaktpunkte 22 befinden sich dabei in einer Umgebung 23 mit einer bekannten oder bestimmbaren Referenztemperatur 24. Zwischen der den Referenzkontaktpunkten 22 wird eine Thermospannung gemessen und als Thermospannungssignal 25 an eine Steuerung 26 weitergeleitet.

Aus dem Thermospannungssignal 25 und der bekannten Referenztemperatur 24 leitet die Steuerung 26 eine Temperatur am Kontaktpunkt 6 des Thermoelements 5 ab. Dies kann beispielsweise über eine entsprechend in der Steuerung 26 hinterlegte Kennlinie erfolgen. Die Kennlinie umfasst dabei eine entsprechende Abhängigkeit der Thermospannung von der am Kontaktpunkt 6 herrschenden Temperatur und der an den Referenzkontaktpunkten 22 herrschenden Referenztemperatur 24. Die Kennlinie kann beispielsweise aus den Seebeck-Koeffizienten des ersten Materials, des zweiten Materials und gegebenenfalls weiterer Materialien berechnet werden. Sie kann aber auch experimentell bestimmt worden sein.

Die abgeleitete Temperatur wird dann von der Auswerteeinrichtung 21 als entsprechendes Temperatursignal 27 ausgegeben und beispielsweise über eine geeignete Anzeigeeinrichtung 28 dargestellt. Ferner ist es auch möglich, dass die Steuerung 26 ein Prozesssteuersignal 29 bereitstellt, welches dazu dient, dem mittels des Laminationsblechs 1 durchgeführten Laminationsprozess zu steuern und zu überwachen.

In Fig. 5 ist eine schematische Darstellung einer Laminationspresse 30 mit zwei erfindungsgemäßen Laminationsblechen 1 dargestellt. An einem oberen Pressstempel 31 und an einem unteren Pressstempel 32 der Laminationspresse 30 ist jeweils ein entsprechendes Laminationsblech 1 angeordnet. Jedes der Laminationsbleche 1 weist jeweils einen Temperatursensor 3 auf, welcher beispielsweise als Thermoelement 5 ausgebildet ist. In dieser Ausführungsform der Laminationspresse 30 ist es möglich, während eines Laminationsprozesses sowohl eine Temperatur an einer Oberseite 18 eines Substratschichtenstapels 17 als auch an einer Unterseite 19 des Substratschichtenstapels 17 zu bestimmen und somit eine Laminationstemperatur optimal zu überwachen und die Qualität des Laminationsprozesses zu verbessern. Der Übersichtlichkeit halber ist eine Auswerteeinrichtung in der Fig. 5 nicht dargestellt.

Die Laminationsbleche 1 können darüber hinaus weitere Temperatursensoren aufweisen, so dass Temperaturen an weiteren Positionen auf den Laminationsblechen 1 bzw. der Oberseite 18 und/oder der Unterseite 19 des Substratschichtenstapels 17 bestimmt werden können.

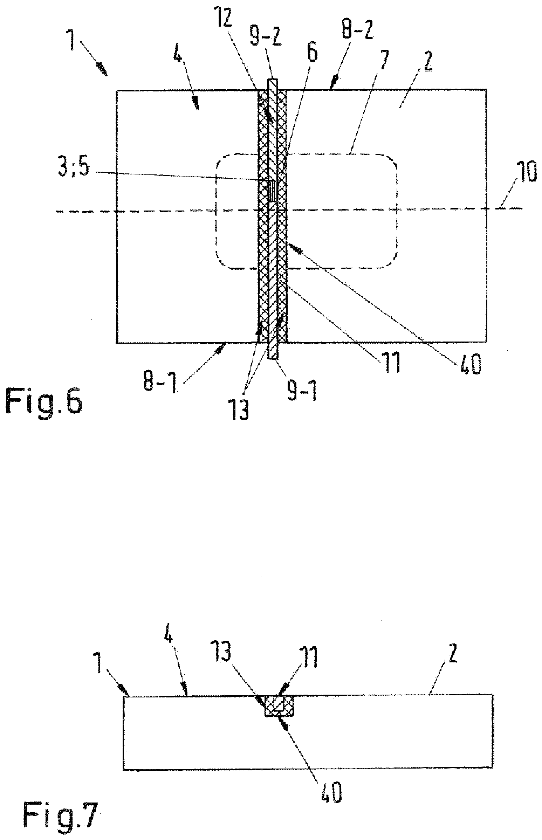

In Fig. 6 ist eine Draufsicht auf eine weitere Ausführungsform eines Laminationsblechs 1. In einer der dem Substratschichtenstapel bei der Lamination zugewandten Seite 4 eines Grundkörpers des Laminationsblechs 1 ist eine langgestreckte Aussparung 40 eingebracht. Diese langgestreckte Aussparung 40 erstreckt sich von einem Rand 8-1 zu einem gegenüberliegenden Rand 8-2 der Seite 4 des Grundkörpers 2. Bei dieser Ausführungsform erstreckt sich die langgestreckte Aussparung durch einen Nutzbereich 7. Von Innen ist die Aussparung 40 mit einem Isoliermittel 13, beispielsweise Byllux 6508 D, vertrieben von der Byla GmbH, Runkel, Deutschland, beschichtet. Der Verbleibende Querschnitt ist von dem einen Rand 8-1 zu einem Kontaktpunkt 6 in dem Nutzbereich 7 mit einem ersten Material, beispielsweise einer Ni-Cr-Legierung beschichtet und verfüllt. Von dem anderen Rand 8-2 bis zum Kontaktpunkt 6 ist der verbleibende Querschnitt der mit dem Isolier-mittel 13 ausgekleideten langgestreckten Aussparung 40 mit einem zweiten Material, beispielsweise einer Cu-Ni-Legierung beschichtet und verfüllt. Vorzugsweise schließen das Isoliermittel und das erste und zweite Material bündig mit der Oberfläche der Seite 4 ab. Dieses gut und der Schnittansicht der Fig. 7 entlang der Schnittlinie 10 der Fig. 6 zu erkennen.

Bei einer Ausführungsform kann vorgesehen sein, das erste Material und das zweite Material einschließlich des Kontaktpunktes, jedoch mit Ausnahme der Kontaktpunkte mit einer Isolier- und/oder Schutzschicht zu versehen. Diese schließt dann vorzugsweise bündig mit der Oberfläche des Grundelements ab.

Wie sich aus Fig. 6 ergibt ist an dem Rand 8-1 ein Anschlusskontakt 9-1 des erstem Materials 11 und an dem gegenüberliegenden anderen Rand 8-2 ein weiterer Anschlusskontakt 9-2 des zweiten Materials 12 ausgebildet.

Bei einer alternativen Ausführungsform kann die langgestreckte Aussparung auch U-förmig oder ähnlich ausgebildet sein und sich von einem Rand in den Nutzbereich und zurück zu diesem Rand erstecken. Der Kontaktpunkt wird dann vorzugsweise im Nutzbereich ausgebildet.

Ferner sind Ausführungsformen möglich, die mehrere Temperatursensoren beispielsweise mehrere als Thermoelemente ausgebildete Temperatursensoren umfassen. Andere Ausführungsformen können auch unterschiedlich ausgebildete Temperatursensoren, beispielsweise einen oder mehrere Thermoelement und einen oder mehrere als Widerstandsmesselement ausgebildete Temperatursensoren umfassen.

### Bezugszeichenliste

- 1: Laminationsblech
- 2: Grundelement
- 3: Temperatursensor
- 4: Seite
- 5: Thermoelement
- 6: Kontaktpunkt
- 7: Nutzenbereich
- 8: Randbereich
- 8-1: Rand
- 8-2: gegenüberliegender Rand
- 9: Anschlusskontakte
- 9-1: Anschlusskontakt
- 9-2: weiterer Anschlusskontakt
- 10: Schnittebene
- 11: erstes Material
- 12: zweites Material
- 13: Isoliermittel
- 14: Aussparung
- 15: Kontaktkupplung
- 16: Zuleitungen
- 17: Substratschichtenstapel
- 18: Oberseite
- 19: Unterseite
- 20: Vorrichtung
- 21: Auswerteeinrichtung
- 22: Referenzkontaktpunkte
- 23: Umgebung
- 24: Referenztemperatur
- 25: Thermospannungssignal
- 26: Steuerung
- 27: Temperatursignal
- 28: Anzeigeeinrichtung
- 29: Prozesssteuersignal
- 30: Laminationspresse
- 31: oberer Pressstempel
- 32: unterer Pressstempel
- 40: langgestreckte Aussparung

## Patentansprüche

1. Laminationsblech (1) zum Laminieren eines aus mehreren Substratschichten bestehenden Substratschichtenstapels (17) zu einem Sicherheits-Dokumentenkörper,
wobei
auf oder an einer beim Laminieren den Substratschichten zugewandten Seite (4) des Laminationsblechs (1) mindestens ein Temperatursensor (3) ausgebildet ist, wobei an dem mindestens einen Temperatursensor (3) ein Messsignal über Anschlusskontakte (9) abgreifbar ist, **dadurch gekennzeichnet, dass** der mindestens eine Temperatursensor (3) auf der beim Laminieren den Substratschichten zugewandten Seite (4) in eine dafür vorgesehene Aussparung (14) in einem Grundelement (2) des Laminationsblechs (1) eingebracht ist, die das Grundelement nicht quer, insbesondere nicht senkrecht, zu der beim Laminieren den Substratschichten zugewandten Seite (4) durchbricht.

2. Laminationsblech (1) nach Anspruch 1, **dadurch gekennzeichnet, dass** der Temperatursensor (3) nach dem Einbringen in die Aussparung (14) derart ausgebildet ist, dass dieser zu keiner zusätzlichen Struktur auf der beim Laminieren den Substratschichten zugewandten Seite (4) führt.

3. Laminationsblech (1) nach einem der vorangegangenen Ansprüche, **dadurch gekennzeichnet, dass** der mindestens eine Temperatursensor (3) als Thermoelement (5) ausgebildet ist,
wobei das Thermoelement (5) ein erstes Material (11) und ein zweites Material (12) umfasst, und wobei ein Kontaktpunkt (6) des Thermoelements (5) auf der beim Laminieren den Substratschichten zugewandten Seite (4) des Laminationsblechs (1) ausgebildet ist, und
wobei das Messsignal eine Thermospannung ist.

4. Laminationsblech (1) nach Anspruch 3, **dadurch gekennzeichnet, dass** das erste Material (11) und das zweite Material (12) durch geeignete Isolationsmittel (13) von dem Grundelement (2) des Laminationsblechs (1) und/oder voneinander, mit Ausnahme am Kontaktpunkt, elektrisch isoliert sind.

5. Laminationsblech (1) nach Anspruch 3 oder 4, **dadurch gekennzeichnet, dass** das erste Material (11) und das zweite Material (12) jeweils als dünne Schichten auf der beim Laminieren den Substratschichten zugewandten Seite (4) des Laminationsblechs (1) aufgebracht sind.

6. Laminationsblech (1) nach Anspruch 5, **dadurch gekennzeichnet, dass** die dünnen Schichten lediglich einen Teil einer Gesamtfläche der beim Laminieren den Substratschichten zugewandten Seite (4) des Laminationsblechs (1) überdecken.

7. Laminationsblech (1) nach einem der Ansprüche 5 oder 6, **dadurch gekennzeichnet, dass** die dünnen Schichten jeweils eine Schichtdicke zwischen 10 nm und 100 µm, bevorzugt zwischen 1000 nm und 50 µm, besonders bevorzugt zwischen 10 µm und 30 µm aufweisen.

8. Laminationsblech (1) nach einem der Ansprüche 3 bis 7, **dadurch gekennzeichnet, dass** das erste Material (11) und/oder das zweite Material (12) ein leitfähiges Polymer umfasst.

9. Laminationsblech (1) nach einem der Ansprüche 3 bis 8, **dadurch gekennzeichnet, dass** die Isolationsmittel (13) ein nicht-leitfähiges Polymer umfassen.

10. Laminationsblech (1) nach einem der Ansprüche 8 oder 9, **dadurch gekennzeichnet, dass** das leitfähige Polymer PEDOT:PSS oder PANI oder PPV oder PPy umfasst.

11. Laminationsblech (1) nach einem Ansprüche 3 bis 7, **dadurch gekennzeichnet, dass** das erste Material (11) und/oder das zweite Material (12) ein Metall und/oder eine Metalllegierung umfassen.

12. Laminationsblech (1) nach einem der Ansprüche 1 bis 11, **dadurch gekennzeichnet, dass** die Anschlusskontakte (9) eine Kontaktkupplung (15) umfassen, über die der mindestens eine Temperatursensor (3) an dem Laminationsblech (1) lösbar mit einer Zuleitung (16) zu einer Auswerteeinrichtung (21) verbindbar ist.

13. Laminationsblech (1) nach einem der Ansprüche 1 bis 12, **dadurch gekennzeichnet, dass** auf oder an der beim Laminieren den Substratschichten zugewandten Seite (4) des Laminationsblechs (1) mindestens ein weiterer Temperatursensor ausgebildet ist,
wobei an dem mindestens einen weiteren Temperatursensor ein weiteres Messsignal an weiteren Anschlusskontakten abgreifbar ist, und wobei der mindestens eine weitere Temperatursensor eine Temperatur an einer anderen Position auf der beim Laminieren den Substratschichten zugewandten Seite (4) des Laminationsblechs (1) erfasst als der mindestens eine Temperatursensor (3).

14. Vorrichtung (20) zum Messen einer Temperatur beim Laminieren eines aus mehreren Substratschichten bestehenden Substratschichtenstapels (17) zu einem Sicherheits-Dokumentenkörper, umfassend:
ein Laminationsblech (1) nach einem der Ansprüche 1 bis 13,
eine Auswerteeinrichtung (21),
wobei die Auswerteeinrichtung (21) derart ausgebildet ist, das Messsignal an den Anschlusskontakten (9) abzugreifen und aus dem abgegriffenen Messsignal durch Vergleich mit einer Kennlinie des mindestens einen Temperatursensors (3) eine Temperatur am Ort des mindestens einen Temperatursensors (3) abzuleiten und als entsprechendes Temperatursignal (27) und/oder ein aus der Temperatur abgeleitetes Prozesssteuersignal (29) auszugeben.

## Claims

1. Lamination sheet (1) for laminating a substrate layer stack (17) consisting of a plurality of substrate layers to form a security document body,
wherein
on or at a side (4) of the lamination sheet (1), which during the lamination faces towards the substrate layers, at least one temperature sensor (3) is formed, wherein, at the at least one temperature sensor (3), a measurement signal can be detected by means of connection contacts (9), **characterised in that** the at least one temperature sensor (3) is located on the side (4) of the lamination sheet (1), which during the lamination faces towards the substrate layers, in a cut-out opening (14), provided for this purpose in a base element (2) of the lamination sheet (1), which does not break transversely, in particular not perpendicularly, to the side (4) which during the lamination faces towards the substrate layers, through the base element.

2. Lamination sheet (1) according to claim 1, **characterised in that** the temperature sensor (3), after being located in the cut-out opening (14) is configured in such a way that it does not lead to any additional structure on the side (4) which during the lamination faces towards the substrate layers.

3. Lamination sheet (1) according to any one of the preceding claims, **characterised in that** the at least one temperature sensor (3) is configured as a thermocouple (5), wherein the thermocouple (5) comprises a first material (11) and a second material (12), and wherein a contact point (6) of the thermocouple (5) is formed on the side (4) of the lamination sheet (1) which during the lamination faces towards the substrate layers, and
wherein the measurement signal is a thermal voltage.

4. Lamination sheet (1) according to claim 3, **characterised in that** the first material (11) and the second material (12) are electrically isolated, by suitable isolation means (13), from the base element (2) of the lamination sheet (1) and/or from one another, with the exception of at the contact point.

5. Lamination sheet (1) according to claim 3 or 4, **characterised in that** the first material (11) and the second material (12) are in each case applied as thin layers on the side (4) of the lamination sheet (1) which during the lamination faces towards the substrate layers.

6. Lamination sheet (1) according to claim 5, **characterised in that** the thin layers only cover a part of the total surface of the side (4) of the lamination sheet (1) which during the lamination faces towards the substrate layers.

7. Lamination sheet (1) according to claim 5 to 6, **characterised in that** the thin layers in each case exhibit a layer thickness of between 10 nm and 100 µm, preferably between 1000 nm and 50 µm, and particularly preferably between 10 µm and 30 µm.

8. Lamination sheet (1) according to any one of claims 3 to 7, **characterised in that** the first material (11) and/or the second material (12) comprises a conductive polymer.

9. Lamination sheet (1) according to any one of claims 3 to 8, **characterised in that** the isolation material (13) comprises a non-conductive polymer.

10. Lamination sheet (1) according to any one of claims 8 or 9, **characterised in that** the conductive polymer comprises PEDOT:PSS or PANI or PPV or PPy.

11. Lamination sheet (1) according to any one of claims 3 to 7, **characterised in that** the first material (11) and/or the second material (12) comprises a metal and/or a metal alloy.

12. Lamination sheet (1) according to any one of claims 1 to 11, **characterised in that** the connection contacts (9) comprise a contact coupling (15), by way of which the at least one temperature sensor (3) at the lamination sheet (1) can be detachably connected by means of a line (16) to an evaluation device (21).

13. Lamination sheet (1) according to any one of claims 1 to 12, **characterised in that**, on or at the side (4) of the lamination sheet (1), which during the lamination faces towards the substrate layers, at least one further temperature sensor is formed, wherein, at the at least one further temperature sensor, a further measurement signal can be detected by means of further connection contacts, and wherein the at least one further temperature sensor detects a temperature at another position on the side (4) of the lamination sheet (1), which during the lamination faces towards the substrate layers, than the position of the at least one temperature sensor (3).

14. Device (20) for measuring a temperature during the laminating of a substrate layer stack (17), consisting of a plurality of substrate layers, to form a security document body, comprising:
A lamination sheet (1) according to any one of claims 1 to 13,
an evaluation device (21),
wherein the evaluation device (21) is configured in such a way as to detect the measurement signal at the connection contacts (9), and, from the detected measurement signal, by comparison with a characteristic curve of the at least one temperature sensor (3), to derive a temperature at the location of the at least one temperature sensor (3), and to issue this as a corresponding temperature signal (27) and/or as a process control signal (29) derived from the temperature.

## Revendications

1. Tôle de laminage (1) pour le laminage d'une pile de couches de substrat (17) se composant de plusieurs couches de substrat en un corps de document de sécurité, dans laquelle
sur ou au niveau d'un côté (4) de la tôle de laminage (1) tourné vers les couches de substrat lors du laminage au moins un capteur de température (3) est réalisé, dans laquelle un signal de mesure peut être prélevé au niveau de l'au moins un capteur de température (3) par le biais de contacts de raccordement (9), **caractérisée en ce que** l'au moins un capteur de température (3) est introduit, sur le côté (4) tourné vers les couches de substrat lors du laminage, dans un évidement (14), prévu à cet effet dans un élément de base (2) de la tôle de laminage (1), qui ne perce pas l'élément de base transversalement, en particulier pas perpendiculairement, vers le côté (4) tourné vers les couches de substrat lors du laminage.

2. Tôle de laminage (1) selon la revendication 1, **caractérisée en ce que** le capteur de température (3) est réalisé après l'introduction dans l'évidement (14) de telle manière que celui-ci ne mène à aucune structure supplémentaire sur le côté (4) tourné vers les couches de substrat lors du laminage.

3. Tôle de laminage (1) selon l'une des revendications précédentes, **caractérisée en ce que** l'au moins un capteur de température (3) est réalisé en tant que thermocouple (5),
dans laquelle le thermocouple (5) comporte un premier matériau (11) et un second matériau (12), et dans laquelle un point de contact (6) du thermocouple (5) est réalisé sur le côté (4) de la tôle de laminage (1) tourné vers les couches de substrat lors du laminage, et
dans laquelle le signal de mesure est une tension thermoélectrique.

4. Tôle de laminage (1) selon la revendication 3, **caractérisée en ce que** le premier matériau (11) et le second matériau (12) sont isolés électriquement de l'élément de base (2) de la tôle de laminage (1) et/ou l'un de l'autre par des moyens d'isolation (13) appropriés, sauf au niveau du point de contact.

5. Tôle de laminage (1) selon la revendication 3 ou 4, **caractérisée en ce que** le premier matériau (11) et le second matériau (12) sont appliqués respectivement en tant que couches minces sur le côté (4) de la tôle de laminage (1) tourné vers les couches de substrat lors du laminage.

6. Tôle de laminage (1) selon la revendication 5, **caractérisée en ce que** les couches minces recouvrent seulement une partie d'une surface entière du côté (4) de la tôle de laminage (1) tourné vers les couches de substrat lors du laminage.

7. Tôle de laminage (1) selon l'une des revendications 5 ou 6, **caractérisée en ce que** les couches minces présentent respectivement une épaisseur de couche entre 10 nm et 100 µm, de préférence entre 1000 nm et 50 µm, de manière particulièrement préférée entre 10 µm et 30 µm.

8. Tôle de laminage (1) selon l'une des revendications 3 à 7, **caractérisée en ce que** le premier matériau (11) et/ou le second matériau (12) comporte un polymère conducteur.

9. Tôle de laminage (1) selon l'une des revendications 3 à 8, **caractérisée en ce que** les moyens d'isolation (13) comportent un polymère non conducteur.

10. Tôle de laminage (1) selon l'une des revendications 8 ou 9, **caractérisée en ce que** le polymère conducteur comporte du PEDOT:PSS ou PANI ou PPV ou PPy.

11. Tôle de laminage (1) selon l'une des revendications 3 à 7, **caractérisée en ce que** le premier matériau (11) et/ou le second matériau (12) comportent un métal et/ou un alliage de métal.

12. Tôle de laminage (1) selon l'une des revendications 1 à 11, **caractérisée en ce que** les contacts de raccordement (9) comportent un couplage de contact (15) par le biais duquel l'au moins un capteur de température (3) peut être relié de manière détachable au niveau de la tôle de laminage (1) à une conduite d'amenée (16) à un dispositif d'évaluation (21).

13. Tôle de laminage (1) selon l'une des revendications 1 à 12, **caractérisée en ce que** sur ou au niveau du côté (4) de la tôle de laminage (1) tourné vers les couches de substrat lors du laminage au moins un autre capteur de température est réalisé,
dans laquelle au niveau de l'au moins un autre capteur de température un autre signal de mesure peut être prélevé au niveau d'autres contacts de raccordement, et dans laquelle l'au moins un autre capteur de température détecte une température au niveau d'une autre position sur le côté (4) de la tôle de laminage (1) tourné vers les couches de substrat lors du laminage en tant que l'au moins un capteur de température (3).

14. Dispositif (20) pour la mesure d'une température lors du laminage d'une pile de couches de substrat (17) se composant de plusieurs couches de substrat en un corps de document de sécurité, comprenant :
une tôle de laminage (1) selon l'une des revendications 1 à 13,
un dispositif d'évaluation (21),
dans lequel le dispositif d'évaluation (21) est réalisé afin de prélever le signal de mesure au niveau des contacts de raccordement (9), et de déduire une température à l'endroit de l'au moins un capteur de température (3) à partir du signal de mesure prélevé par comparaison avec une ligne caractéristique de l'au moins un capteur de température (3), et d'émettre en tant que signal de température (27) correspondant et/ou un signal de commande de processus (29) déduit de la température.
